# EUROPÄISCHE PATENTSCHRIFT

(11) **EP 3 120 076 B1**
(45) Veröffentlichungstag und Bekanntmachung des Hinweises auf die Patenterteilung: **22.08.2018**
(21) Anmeldenummer: 15716721.4
(22) Anmeldetag: 11.03.2015
(51) Int. Cl.: F23D 5/04, F23D 5/12, F23D 3/40

(54) **VERDAMPFERBRENNER**
EVAPORATION BURNER
BRÛLEUR À VAPORISATION

(30) Priorität: 20.03.2014 DE 102014103815
(43) Veröffentlichungstag der Anmeldung: 25.01.2017
(73) Patentinhaber: Webasto SE, 82131 Stockdorf (DE)
(72) Erfinder: DELL, Vitali, 82131 Stockdorf (DE); MÖSL, Klaus, 82131 Stockdorf (DE); SOMMERER, Stefan, 82131 Stockdorf (DE); KERSCHER, Thomas, 82131 Stockdorf (DE)
(74) Vertreter: Ciesla, Bettina
(86) Internationale Anmeldenummer: PCT/DE2015/100101
(87) Internationale Veröffentlichungsnummer: WO 2015/139685

(56) Entgegenhaltungen:
- EP-A1- 1 519 110
- DE-A1- 19 529 994
- DE-A1- 19 548 223
- DE-A1-102004 049 902
- US-A1- 2009 263 757

## Beschreibung

Die vorliegende Erfindung betrifft einen Verdampferbrenner für ein mobiles Heizgerät mit einem Brennraum, einer Brennstoffzuführung zum Zuführen flüssigen Brennstoffs und einem Verdampfer zum Verdampfen von zugeführtem Brennstoff.

Derartige Verdampferbrenner kommen insbesondere in Fahrzeugheizgeräten zum Einsatz, die als Standheizgeräte oder Zusatzheizgeräte für Fahrzeuge ausgebildet sind. Unter einem Zusatzheizgerät ist dabei ein Heizgerät zu verstehen, das dazu ausgebildet ist, während des Betriebs des Antriebsmotors des Fahrzeugs zusätzlich Wärme bereitzustellen. Unter einem Standheizgerät ist ein Heizgerät zu verstehen, das derart ausgebildet ist, dass es sowohl während eines Betriebs des Antriebsmotors des Fahrzeugs als auch während dessen Stillstands Wärme bereitstellen kann. Derartige Fahrzeugheizgeräte können dabei z.B. als sogenannte Luftheizgeräte ausgebildet sein, bei denen die freigesetzte Wärme in einem Wärmetauscher von heißen Verbrennungsabgasen auf zu erwärmende Luft übertragen wird, oder als sogenannte Flüssigkeitsheizgeräte, bei denen die freigesetzte Wärme in einem Wärmetauscher von den heißen Verbrennungsabgasen auf eine Flüssigkeit übertragen wird, die insbesondere durch Kühlflüssigkeit in einem Kühlflüssigkeitskreislauf des Fahrzeugs gebildet sein kann.

Unter einem "mobilen Heizgerät" wird im vorliegenden Kontext ein Heizgerät verstanden, das für den Einsatz in mobilen Anwendungen ausgelegt und dementsprechend angepasst ist. Dies bedeutet insbesondere, dass es transportabel ist (ggf. in einem Fahrzeug fest eingebaut oder lediglich für den Transport darin untergebracht) und nicht ausschließlich für einen dauerhaften, stationären Einsatz, wie es beispielsweise bei der Beheizung eines Gebäudes der Fall ist, ausgelegt ist. Dabei kann das mobile Heizgerät auch fest in einem Fahrzeug (Landfahrzeug, Schiff, etc.), insbesondere in einem Landfahrzeug, installiert sein. Insbesondere kann es zur Beheizung eines Fahrzeug-Innenraums, wie beispielsweise eines Land-, Wasser- oder Luftfahrzeugs, sowie eines teiloffenen Raumes, wie er beispielsweise auf Schiffen, insbesondere Yachten, aufzufinden ist, ausgelegt sein. Das mobile Heizgerät kann auch vorübergehend stationär eingesetzt werden, wie beispielsweise in großen Zelten, Containern (zum Beispiel Baucontainern), etc. Insbesondere kann das mobile Heizgerät als Stand- oder Zuheizer für ein Landfahrzeug, wie beispielsweise für einen Wohnwagen, ein Wohnmobil, einen Bus, einen Pkw, etc., ausgelegt sein.

Bei den genannten Verdampferbrennern wird ein flüssiger Brennstoff, der z.B. durch Diesel, Benzin, Ethanol oder Ähnliches gebildet sein kann, über eine Brennstoffzuführung zugeführt und anschließend verdampft und zur Ausbildung eines Brennstoff-Luft-Gemisches mit ebenfalls zugeführter Brennluft vermischt. Das ausgebildete Brennstoff-Luft-Gemisch wird dann in einer exothermen Reaktion unter Freisetzung von Wärme umgesetzt. Um eine zuverlässige Verdampfung des flüssigen Brennstoffs zu erzielen, ist es wichtig, den Verdampfungsprozess möglichst gut zu kontrollieren. Dabei bereitet es insbesondere in der Praxis Probleme, dass es häufig zu einem unkontrollierten Wechsel zwischen erwünschtem Blasensieden und unerwünschtem Filmsieden kommt.
EP 1 519 110 A1 beschreibt eine Brenneranordnung für ein Fahrzeugheizgerät mit einem Wandungsbereich, der einen Volumenbereich mit erhöhter Temperatur begrenzt. Der Wandungsbereich ist wenigstens teilweise mit einer thermisch isolierenden Beschichtung beschichtet. DE102004049902 offenbart einen Verdampferbrenner für ein mobiles Heizgerät gemäss dem Oberbegriff des Anspruchs 1.

Es ist Aufgabe der vorliegenden Erfindung einen verbesserten Verdampferbrenner für ein mobiles Heizgerät bereitzustellen.
Die Aufgabe wird durch einen Verdampferbrenner für ein mobiles Heizgerät nach Anspruch 1 gelöst. Vorteilhafte Weiterbildungen sind in den abhängigen Ansprüchen angegeben.
Die Oberflächenstrukturierung kann in die Brennstoffaufbereitungsoberfläche eingebracht sein, kann in die Rückseite des Trägerkörpers eingebracht sein oder es kann sowohl in die Brennstoffaufbereitungsoberfläche als auch in die Rückseite des Trägerkörpers jeweils eine solche Oberflächenstrukturierung eingebracht sein. Die Brennstoffaufbereitungsoberfläche kann z.B. durch eine Oberfläche des Trägerkörpers gebildet sein, die durch ein Verdampferelement aus einem porösen, saugfähigen Material bedeckt ist. In einer anderen Ausgestaltung ist es aber z.B. auch möglich, dass die Brennstoffaufbereitungsoberfläche gegenüber dem Brennraum freiliegt und selbst als Verdampfungsoberfläche dient, ausgehend von der eine I Verdampfung des Brennstoffs erfolgt. Der Brennraum kann dabei insbesondere auch einen Gemischaufbereitungsbereich aufweisen, in dem im Betrieb des Verdampferbrenners keine Flamme ausgebildet wird und in der eine Vormischung von Brennstoff mit Brennluft zu einem Brennstoff-Luft-Gemisch erfolgt. In diesem Fall kann die Brennstoffaufbereitungsoberfläche z.B. auch ganz oder teilweise in dem Gemischaufbereitungsbereich angeordnet sein.

Wenn die Brennstoffaufbereitungsoberfläche mit der Oberflächenstrukturierung versehen ist, wird durch die Oberflächenstrukturierung eine Intensivierung des Wärmeübergangs von dem Trägerkörper auf den flüssigen Brennstoff erreicht, was sich vorteilhaft auf den Verdampfungsprozess auswirkt. Die Oberflächenstrukturierung beeinflusst dabei positiv die Entstehung, das Wachstum und den Abtransport von Dampfblasen, sodass sich ein stabilerer Verdampfungsprozess einstellt. Wenn die Oberflächenstrukturierung in die Rückseite des Trägerkörpers eingebracht ist, ist ein verbesserter Wärmeeintrag in den Trägerkörper ermöglicht, sodass ein erhöhter Wärmestrom zwischen dem Trägerkörper und dem zu verdampfenden Brennstoff erzielbar ist.

Gemäß einer vorteilhaften Ausgestaltung ist die Oberflächenstrukturierung in die Brennstoffaufbereitungsoberfläche eingebracht. Es kann dabei zusätzlich auch in eine von der Brennstoffaufbereitungsoberfläche abgewandte Rückseite eine Oberflächenstrukturierung eingebracht sein.

Gemäß einer Ausgestaltung ist die Brennstoffaufbereitungsoberfläche zu dem Brennraum hin freiliegend. In diesem Fall dient die Brennstoffaufbereitungsoberfläche selbst auch als Verdampfungsoberfläche, ausgehend von der eine Verdampfung des Brennstoffs erfolgt. Die Oberflächenstrukturierung ermöglicht in diesem Fall einen stabileren Verdampfungsprozess an der Brennstoffaufbereitungsoberfläche.

Gemäß einer anderen Ausgestaltung ist auf der Brennstoffaufbereitungsoberfläche ein Verdampferelement aus einem porösen, saugfähigen Material angeordnet. In diesem Fall wird durch die Oberflächenstrukturierung ferner eine verbesserte mechanische und thermische Verbindung zu dem Verdampferelement bereitgestellt. Das Verdampferelement kann z.B. ein Metallvlies, ein Metallfasergewebe, ein Sintermetall und/oder eine Sinterkeramik aufweisen. Das Verdampferelement stellt in an sich bekannter Weise eine große Oberfläche für die Verdampfung des flüssigen Brennstoffs bereit und fördert eine gleichmäßige Verteilung des Brennstoffs.

Gemäß einer Weiterbildung ist das Verdampferelement unter einer plastischen Deformation des Verdampferelements gegen die Oberflächenstrukturierung gepresst. In diesem Fall ist eine besonders vorteilhafte mechanische und thermische Verbindung zwischen dem Verdampferelement und dem Trägerkörper bereitgestellt.

Gemäß einer Weiterbildung ist an einem freien Ende des Verdampferelements eine Abdeckung vorgesehen. In diesem Fall kann ein unkontrolliertes Austreten von Brennstoff an dem stirnseitigen Ende des Verdampferelements zuverlässig verhindert werden.

Gemäß einer Weiterbildung sind die Vertiefungen als längliche Rillen und die Erhebungen als rippenartige Vorsprünge ausgebildet. In diesem Fall können die Vertiefungen und Erhebungen besonders kostengünstig durch einen mechanischen Bearbeitungsschritt in das Material des Trägerkörpers eingebracht werden. Bevorzugt kann die Oberflächenstrukturierung eine im Querschnitt betrachtet wellenartige oder gewindeartige Form aufweisen, um eine besonders vorteilhafte Brennstoffaufbereitung zu ermöglichen. Eine solche Form kann dabei insbesondere kostengünstig ausgebildet werden, wenn die Brennstoffaufbereitungsoberfläche durch eine umlaufende Außenseite eines in den Brennraum ragenden Trägerkörpers ausgebildet ist.

Der Trägerkörper ist durch einen länglichen Körper gebildet, der sich ausgehend von einer Stirnwand des Brennraums beabstandet von einer Seitenwand des Brennraums axial in den Brennraum erstreckt und dessen Außenumfangsfläche die Brennstoffaufbereitungsoberfläche aufweist. Auch in diesem Fall kann die Brennstoffaufbereitungsoberfläche zu dem Brennraum hin freiliegend ausgebildet sein oder auf der Brennstoffaufbereitungsoberfläche kann ein Verdampferelement aus einem porösen, saugfähigen Material angeordnet sein. Diese Ausgestaltung des Trägerkörpers ermöglicht eine zuverlässige Ausbildung eines Brennstoff-Luft-Gemisches bei unterschiedlichen Förderraten der Brennluft und des Brennstoffes.

Gemäß einer Weiterbildung weist der Trägerkörper eine im Wesentlichen zylinderförmige Außenumfangsfläche auf. Diese Ausgestaltung ermöglicht eine besonders vorteilhafte Umströmung mit Brennluft.

Gemäß einer Weiterbildung weist der Trägerkörper eine axiale Länge auf, die zumindest dem 1,5-fachen, bevorzugt zumindest dem 2-fachen des Durchmessers des Trägerkörpers entspricht. Insbesondere in diesem Fall ist eine zuverlässige Bildung des Brennstoff-Luft-Gemisches bei verschiedenen Heizleistungen des Verdampferbrenners ermöglicht. Bevorzugt ist der Trägerkörper derart in dem Brennraum angeordnet, dass die Außenumfangsfläche von zugeführter Brennluft umströmt wird.

Die Aufgabe wird auch durch ein mobiles Heizgerät mit einem solchen Verdampferbrenner gemäß Anspruch 12 gelöst. Gemäß einer Weiterbildung ist das mobile Heizgerät als Standheizung oder Zusatzheizung für ein Fahrzeug ausgebildet.
Weitere Vorteile und Weiterbildungen ergeben sich aus der nachfolgenden Beschreibung von Ausführungsbeispielen unter Bezugnahme auf die beigefügten Zeichnungen.
- Fig. 1: ist eine schematische Darstellung eines Verdampferbrenners gemäß einer nicht erfindungsgemäßen ersten Ausführungsform.
- Fig. 2: ist eine schematische Darstellung eines als schalenartige Verdampferaufnahme ausgebildeten Trägerkörpers bei der ersten nicht erfindungsgemässen Ausführungsform.
- Fig. 3 a) bis l): sind schematische Darstellungen von verschiedenen Ausgestaltungen einer Oberflächenstrukturierung, die bei dem Ausführungsbeispiel realisiert werden können.
- Fig. 4 a) bis c): sind schematische Teildarstellungen des Trägerkörpers bei der ersten nicht erfindungsgemässen Ausführungsform.
- Fig. 5 a) bis c): sind schematisch Teildarstellungen des Trägerkörpers bei einer Abwandlung der ersten nicht erfindungsgemässen Ausführungsform.
- Fig. 6: ist eine schematische Darstellung eines Verdampferbrenners gemäß einer erfindungsgemäßen Ausführungsform.
- Fig. 7: ist eine schematische Darstellung eines Trägerkörpers bei der zweiten Ausführungsform.
- Fig. 8: ist eine schematische Darstellung eines Trägerkörpers gemäß einer Abwandlung der Ausführungsform.
- Fig. 9: ist eine schematische Darstellung eines Trägerkörpers gemäß einer weiteren Abwandlung der Ausführungsform.
- Fig. 10 a) bis i): sind schematische Darstellungen von weiteren Abwandlungen des freien Endes des Trägerkörpers.

### ERSTE AUSFÜHRUNGSFORM

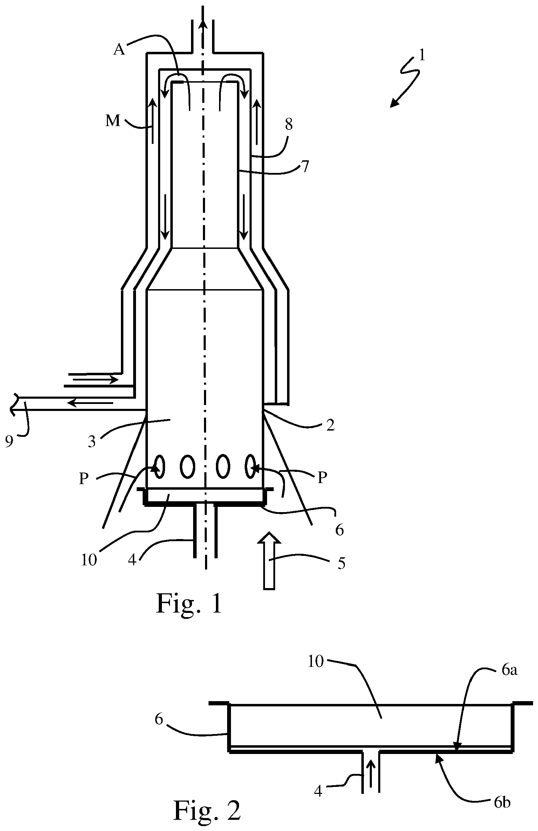

Eine nicht erfindungsgemäße erste Ausführungsform wird im Folgenden unter Bezugnahme auf die Fig. 1 bis Fig. 4 beschrieben.

Der in Fig. 1 schematisch dargestellte Verdampferbrenner 1 für ein mobiles Heizgerät gemäß der ersten Ausführungsform ist als ein Verdampferbrenner für eine Standheizung oder Zusatzheizung eines Fahrzeuges, insbesondere eines Straßenfahrzeuges, ausgebildet.

Der Verdampferbrenner 1 gemäß der ersten Ausführungsform weist eine Brennkammer 2 auf, in der ein Brennraum 3 ausgebildet ist, in dem eine Umsetzung eines Brennstoff-Luft-Gemisches unter Freisetzung von Wärme erfolgt. Der Verdampferbrenner 1 weist eine Brennstoffzufuhrleitung 4 zum Zuführen eines flüssigen Brennstoffs auf. Der flüssige Brennstoff kann dabei insbesondere durch einen Kraftstoff gebildet sein, der auch zum Betrieb eines Verbrennungsmotors des Fahrzeugs zum Einsatz kommt, insbesondere durch Benzin, Diesel, Ethanol oder Ähnliches. Die Brennstoffzufuhrleitung 4 kann insbesondere in an sich bekannter Weise mit einer (nicht dargestellten) Brennstofffördervorrichtung verbunden sein, mit der der flüssige Brennstoff gefördert werden kann. Die Brennstofffördervorrichtung kann dabei insbesondere durch eine Brennstoffdosierpumpe gebildet sein.

Es ist ferner eine in Fig. 1 nur schematisch dargestellte Brennluftzuführung 5 zum Zuführen von Brennluft in den Brennraum 3 vorgesehen. In Fig. 1 ist durch Pfeile P schematisch in den Brennraum 3 eintretende Brennluft dargestellt. Die Brennluftzuführung 5 weist in an sich bekannter Weise eine (nicht dargestellte) Brennluftfördervorrichtung auf, die z.B. durch ein Gebläse gebildet sein kann.

Bei dem Ausführungsbeispiel ist der Brennraum 3 stirnseitig durch einen Trägerkörper 6 aus einem massiven, nicht-porösen Material verschlossen, der als eine schalenartige Verdampferaufnahme ausgebildet ist. Die Brennstoffzufuhrleitung 4 mündet an dem Trägerkörper 6, sodass flüssiger Brennstoff zu dem Trägerkörper 6 zuführbar ist. Im Betrieb des Verdampferbrenners 1 findet eine Verdampfung des zugeführten flüssigen Brennstoffs statt. Der verdampfte Brennstoff wird mit der über die Brennluftzuführung 5 zugeführten Brennluft zu einem Brennstoff-Luft-Gemisch vermischt und in dem Brennraum 3 unter Freisetzung von Wärme umgesetzt. Die heißen Verbrennungsabgase A strömen über ein dem Brennraum 3 nachgeordnetes Brennrohr 7 ab und durch einen Wärmetauscher 8, in dem zumindest ein Teil der freigesetzten Wärme auf ein zu erwärmendes Medium M übertragen wird. Das zu erwärmende Medium kann dabei z.B. durch zu erwärmende Luft, insbesondere für einen Innenraum eines Fahrzeugs, oder durch Kühlflüssigkeit in einem Kühlflüssigkeitskreislauf eines Fahrzeugs gebildet sein. Bei dem dargestellten Ausführungsbeispiel strömt das zu erwärmende Medium M in dem Wärmetauscher 8 in entgegengesetzter Richtung zu den heißen Verbrennungsabgasen A. Nach dem Durchlaufen des Wärmetauschers 8 werden die Verbrennungsabgase A durch einen Abgasauslass 9 abgeführt.

Der Trägerkörper 6 weist eine dem Brennraum 3 zugewandte Brennstoffaufbereitungsoberfläche 6a und eine von dieser abgewandte Rückseite 6b auf. Bei der ersten Ausführungsform ist an dem als schalenartige Verdampferaufnahme ausgebildeten Trägerkörper 6 ein Verdampferelement 10 aus einem porösen, saugfähigen Material angeordnet, das die Brennstoffaufbereitungsoberfläche 6a bedeckt. Das Verdampferelement 10 kann dabei insbesondere aus einem Metallvlies, einem Metallfasergewebe, einem Sintermetall und/oder einer Sinterkeramik gebildet sein. Obwohl in den Fig. 1 und Fig. 2 schematisch eine einlagige Struktur des Verdampferelements 10 dargestellt ist, kann dieses auch eine mehrlagige Struktur aufweisen.

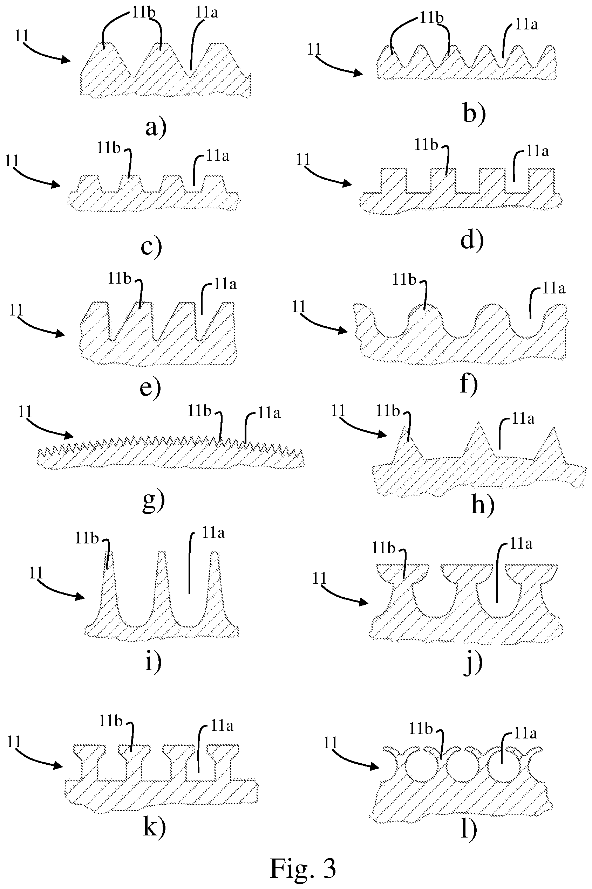

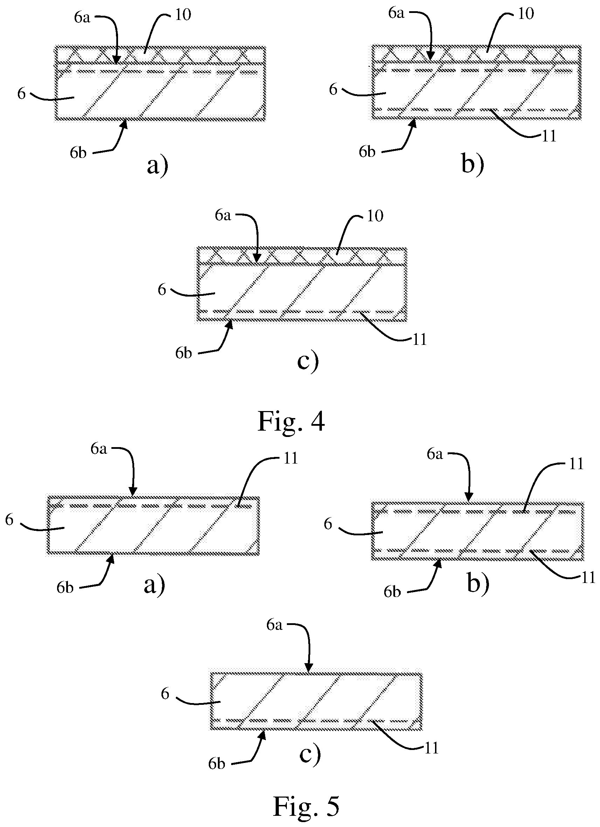

Bei dem ersten Ausführungsbeispiel ist in der Brennstoffaufbereitungsoberfläche 6a des Trägerkörpers 6 eine Oberflächenstrukturierung 11 mit einer Vielzahl von Vertiefungen 11a und Erhebungen 11b ausgebildet, wie schematisch in Fig. 4a) gestrichelt dargestellt ist. Beispielhafte Ausgestaltungen der Oberflächenstrukturierung 11 sind in den Fig. 3a) bis 3l) dargestellt. In den Fig. 3a) bis 3l) sind jeweils beispielhafte Schnitte durch verschiedene Ausgestaltungen der Oberflächenstrukturierung 11 dargestellt. Dabei erstrecken sich die Vertiefungen 11a bevorzugt als längliche Rillen entlang der Oberfläche des Trägerkörpers 6 und die Erhebungen 11b erstrecken sich als rippenartige Vorsprünge entlang der Oberfläche des Trägerkörpers 6.

Das Verdampferelement10 ist bei einer bevorzugten Ausgestaltung derart gegen die Oberflächenstrukturierung 11 gepresst, dass es leicht plastisch deformiert ist. In dieser Weise ist eine besonders vorteilhafte thermische und mechanische Ankopplung des Verdampferelements 10 an den Trägerkörper 6 gewährleistet. Durch die Oberflächenstrukturierung 11 ist ein guter Wärmeübergang von dem Trägerkörper 6 auf das Verdampferelement bereitgestellt, der eine besonders kontrollierte Brennstoffverdampfung ermöglicht.

### ABWANDLUNGEN

In Fig. 4b) ist schematisch eine erste Abwandlung der ersten Ausführungsform dargestellt, bei der sowohl die dem Brennraum 3 zugewandte Brennstoffaufbereitungsoberfläche 6a als auch die von dieser abgewandte Rückseite 6b des Trägerkörpers 6 jeweils mit einer Oberflächenstrukturierung 11 versehen sind. Aufgrund der in die Rückseite 6b eingebrachten Oberflächenstrukturierung 11 kann ein verbesserter Wärmeübergang zu dem Trägerkörper 6 über die Rückseite 6b erzielt werden, wodurch zusätzlich der Verdampfungsprozess optimiert werden kann. Die Oberflächenstrukturierung 11 kann dabei z.B. wieder wie in den Fig. 3a) bis Fig. 3l) schematisch dargestellt ausgeführt sein.

In Fig. 4c) ist schematisch eine zweite Abwandlung der ersten Ausführungsform dargestellt, bei der nur in der Rückseite 6b des Trägerkörpers 6 eine Oberflächenstrukturierung 11 eingebracht ist und die Brennstoffaufbereitungsoberfläche 6a nicht mit einer solchen Oberflächenstrukturierung 11 versehen ist.

Gemäß einer weiteren Abwandlung der ersten Ausführungsform ist die Brennstoffaufbereitungsoberfläche 6a des Trägerkörpers 6 nicht mit einem zusätzlichen Verdampferelement 10 bedeckt, sondern die Brennstoffaufbereitungsoberfläche 6a ist selbst als Verdampfungsoberfläche ausgebildet, die gegenüber dem Brennraum 3 freiliegend angeordnet ist und ausgehend von der die Verdampfung des Brennstoffs erfolgt. Auch bei dieser Abwandlung kann die Oberflächenstrukturierung 11 nur in der Brennstoffaufbereitungsoberfläche 6a ausgebildet sein, wie in Fig. 5a) schematisch dargestellt ist, können sowohl in der Brennstoffaufbereitungsoberfläche 6a als auch in der Rückseite 6b des Trägerkörpers 6 jeweils Oberflächenstrukturierungen 11 ausgebildet sein, wie in Fig. 5b) schematisch dargestellt ist, oder es kann auch nur in der Rückseite 6b des Trägerkörpers 6 eine solche Oberflächenstrukturierung 11 ausgebildet sein, wie in Fig. 5c) schematisch dargestellt ist.

Obwohl in Bezug auf das erste Ausführungsbeispiel lediglich ein Trägerkörper 6 mit einer ebenen Brennstoffaufbereitungsoberfläche 6a beschrieben wurde, sind auch andere Ausgestaltungen möglich, insbesondere kann die Brennstoffaufbereitungsoberfläche 6a auch eine gekrümmte Form aufweisen, z.B. auch durch die umlaufende Außenseite eines z.B. zylindrischen oder sich verjüngenden Trägerkörpers gebildet sein oder durch die umlaufende Innenseite eines z.B. hohlzylindrischen oder hohlkegelförmigen Trägerkörpers gebildet sein.

Die Oberflächenstrukturierung 11 kann dabei, wie z.B. in den Fig. 3a) bis Fig. 3l) schematisch dargestellt ist, in Form eines sich wiederholenden Musters ausgebildet sein oder z.B. eine unregelmäßige Struktur aufweisen. Das Profil der Oberflächenstrukturierung 11 kann dabei verschiedene Formen aufweisen.

Das Ausbilden der Oberflächenstrukturierung 11 kann insbesondere durch zerspanende Bearbeitung, durch umformende Bearbeitung oder durch urformende Bearbeitung erfolgen. Aufgrund der beschriebenen Oberflächenstrukturierung 11 wird eine verbesserte Brennstoffaufbereitung bei mit flüssigem Brennstoff betriebenen Heizgeräten ermöglicht, die wiederum zu einem stabileren Betrieb und in Folge zu einer verlängerten Lebensdauer des Verdampferbrenners führt. Dabei wird bei der Brennstoffaufbereitung eine Verbesserung des Wärmeübergangs in den flüssigen Brennstoff bereitgestellt, wodurch eine bessere Kontrolle der Brennstofferwärmung und -verdampfung erzielt wird und ein willkürlicher Wechsel zwischen Blasensieden und Filmsieden unterbunden werden kann. Außerdem kann in dieser Weise die Verweildauer zur Brennstoffaufbereitung reduziert werden, wodurch die Ausbildung von Ablagerungen vermindert wird.

Bei der Ausbildung der Oberflächenstrukturierung 11 in der Brennstoffaufbereitungsoberfläche 6a wird die Benetzbarkeit und damit einhergehend die Brennstoffverteilung verbessert. Ferner wird die Anzahl an Keimstellen für ein erwünschtes Blasensieden erhöht, sodass unerwünschtes Filmsieden zuverlässiger unterbunden werden kann. In Kombination mit einem separaten Verdampferelement 10 wird eine verbesserte thermische und mechanische Ankopplung zwischen dem Trägerkörper 6 und dem Verdampferelement 10 erreicht und im Rahmen eines Montageprozesses können auch umfangreichere Toleranzschwankungen zuverlässig kompensiert werden.

### ZWEITE AUSFÜHRUNGSFORM

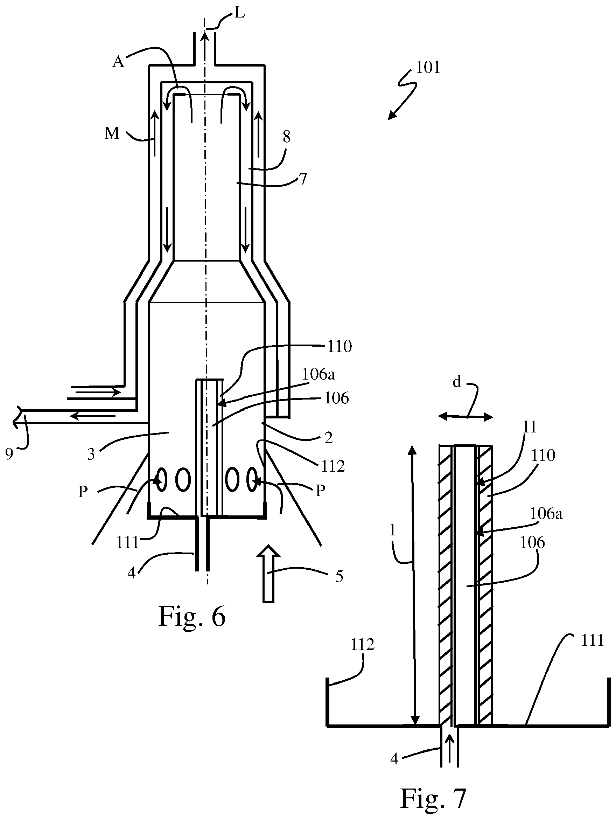

Eine erfindungsgemäße Ausführungsform eines Verdampferbrenners 101 wird im Folgenden unter Bezugnahme auf die Fig. 6 und Fig. 7 beschrieben. Der Verdampferbrenner 101 gemäß der zweiten Ausführungsform unterscheidet sich lediglich in der Ausgestaltung des Trägerkörpers und des optional an diesem angeordneten Verdampferelements von dem Verdampferbrenner 1 gemäß der ersten Ausführungsform, sodass im Folgenden zur Bezeichnung der entsprechenden Komponenten die gleichen Bezugszeichen verwendet werden und eine Wiederholung der Beschreibung dieser Komponenten unterbleibt.

Bei dem Verdampferbrenner 101 gemäß dem zweiten Ausführungsbeispiel ist anstelle des schalenartigen Trägerkörpers 6 ein Trägerkörper 106 in dem Brennraum 3 angeordnet.

Obwohl in der schematischen Darstellung eine Anordnung des Trägerkörpers 106 in einem Bereich des Brennraums 3 dargestellt ist, in dem im Betrieb des Verdampferbrenners 101 eine Flamme ausgebildet ist, ist es z.B. auch möglich, den Trägerkörper 106 vollständig oder teilweise in einem Gemischaufbereitungsbereich anzuordnen, in dem eine Durchmischung von Brennluft und Brennstoff zu einem Brennstoff-Luft-Gemisch erfolgt, aber im Betrieb des Verdampferbrenners 101 keine Umsetzung des Brennstoff-Luft-Gemischs erfolgt. Obwohl im Hinblick auf die Ausführungsformen jeweils eine flammende Verbrennung beschrieben ist, ist es auch möglich, den Verdampferbrenner derart auszugestalten, dass eine teil- oder vollkatalytische Umsetzung des Brennstoff-Luft-Gemischs erfolgt.

Der Trägerkörper 106 gemäß der zweiten Ausführungsform erstreckt sich ausgehend von einer Stirnwand 111 des Brennraums 3 und beabstandet von einer Seitenwand 112 des Brennraums 3 im Wesentlichen parallel zu einer Längsachse L des Verdampferbrenners 101 in den Brennraum 3. Bei der in Fig. 4 schematisch dargestellten Ausführungsform erstreckt sich der Trägerkörper 106 dabei konzentrisch zu der Längsachse L, was grundsätzlich bevorzugt ist, es sind jedoch auch abweichende Anordnungen möglich.

Der Trägerkörper 106 weist eine längliche Form mit einer Länge l auf, die deutlich größer ist als ein Durchmesser d des Trägerkörpers 106. Die Länge l entspricht dabei bevorzugt zumindest dem 1,5-fachen des Durchmessers d, mehr bevorzugt zumindest dem 2-fachen. Bei der dargestellten Ausführungsform ist der Trägerkörper 106 durch einen massiven zylindrischen Körper gebildet. Es sind z.B. aber auch andere Ausgestaltungen möglich, z.B. kann sich der Trägerkörper 106 auch zu einem Ende hin verjüngen oder verbreitern.

Der Trägerkörper 106 weist eine Brennstoffaufbereitungsoberfläche 106a auf, die bei der zweiten Ausführungsform durch die im Wesentlichen zylindrische Außenumfangsfläche des Trägerkörpers 106 gebildet ist. Obwohl in den Fig. 6 und Fig. 7 eine Ausführungsform dargestellt ist, bei der die gesamte Außenumfangsfläche als Brennstoffaufbereitungsoberfläche 106a ausgebildet ist, ist es z.B. auch möglich, dass sich die Brennstoffaufbereitungsoberfläche 106a nur über einen Teilbereich der Außenumfangsfläche des Trägerkörpers 106 erstreckt.

Bei der in den Fig. 6 und Fig. 7 schematisch dargestellten Ausführungsform ist die Brennstoffaufbereitungsoberfläche 106a durch ein Verdampferelement 110 aus einem porösen, saugfähigen Material bedeckt. Das Verdampferelement 110 kann z.B. wiederum aus einem Metallvlies, einem Metallfasergewebe, einem Sintermetall und/oder einer Sinterkeramik gebildet sein. Das Verdampferelement 110 kann dabei, wie bei der ersten Ausführungsform einlagig oder auch mehrlagig ausgebildet sein.

Das Verdampferelement 110 weist bei der zweiten Ausführungsform eine im Wesentlichen hohlzylindrische Form auf und liegt mit einer Innenfläche an der Brennstoffaufbereitungsoberfläche 106a des Trägerkörpers 106 an. Auch bei der zweiten Ausführungsform kann das Verdampferelement 110 unter einer plastischen Deformation des Verdampferelements 110 gegen den Trägerkörper 106 gepresst sein, wie es mit Bezug auf die erste Ausführungsform beschrieben wurde. Dies kann z.B. durch Aufpressen, Aufschieben, Aufdrehen, Versintern, Verschweißen, etc. umgesetzt werden.

Die Brennstoffzufuhrleitung 4 mündet bei dem Verdampferbrenner 101 an der Stirnseite 111 derart, dass der flüssige Brennstoff zu der Brennstoffaufbereitungsoberfläche 106a des Trägerkörpers 106 und zu dem Verdampferelement 110 zugeführt wird. Im Betrieb des Verdampferbrenners 101 umströmt die zugeführte Brennluft den Trägerköper 106 und es erfolgt dabei eine Durchmischung der zugeführten Brennluft mit verdampfendem Brennstoff zu einem Brennstoff-Luft-Gemisch. Die Brennluft kann dabei bevorzugt mit einer tangentialen Richtungskomponente bzw. einem Drall zugeführt werden, um eine verbesserte Umströmung des Trägerkörpers 106 zu erzielen.

Auch bei der zweiten Ausführungsform ist in die Brennstoffaufbereitungsoberfläche 106a eine Oberflächenstrukturierung 11 mit einer Vielzahl von Erhebungen und Vertiefungen eingebracht, die derart ausgebildet sein kann, wie es zuvor im Hinblick auf die erste Ausführungsform beschrieben wurde. Insbesondere kann die Oberflächenstrukturierung 11 eine Querschnittform aufweisen, wie es schematisch in den Fig. 3a) bis Fig. 3l) dargestellt ist.

Die Ausgestaltung der Brennstoffaufbereitungsoberfläche 106a mit der Oberflächenstrukturierung 11 erzielt dabei bei der zweiten Ausführungsform dieselben Vorteile, die auch bereits im Hinblick auf die erste Ausführungsform beschrieben wurden.

Obwohl in Bezug auf die Fig. 6 und Fig. 7 ein Ausführungsbeispiel beschrieben wurde, bei dem das Verdampferelement 110 auf der Brennstoffaufbereitungsoberfläche 106a angeordnet ist, ist es auch bei der zweiten Ausführungsform möglich, dass die Brennstoffaufbereitungsoberfläche 6a zu dem Brennraum 3 hin freiliegend ausgebildet wird und selbst als Verdampfungsoberfläche dient, ohne dass ein separates Verdampferelement 110 vorgesehen ist.

Im Betrieb des Verdampferbrenners 101 gemäß der zweiten Ausführungsform tritt der zugeführte flüssige Brennstoff stirnseitig aus der Brennstoffzufuhrleitung 4 aus und benetzt von dort aus ausgehend die Brennstoffaufbereitungsoberfläche 106a. Aufgrund der großen axialen Erstreckung des Trägerkörpers 106 und der Brennstoffaufbereitungsoberfläche 106a wird auch bei unterschiedlichen Heizleistungsstufen des Verdampferbrenners 101, d.h. bei unterschiedlichen Brennstoffzufuhrraten und Brennluftzufuhrraten, jeweils eine gute Durchmischung von Brennstoff mit Brennluft zu einem Brennstoff-Luft-Gemisch erreicht.

Der Trägerkörper 106 dient dabei gleichzeitig dazu, durch Wärmeleitung die für den Verdampfungsprozess erforderliche Wärmeenergie aus dem heißen Bereich des Brennraums 3, in dem im Betrieb eine Flamme ausgebildet ist, zuzuführen. Dabei dient die Brennstoffaufbereitungsoberfläche 106a als eine Heizfläche, die die Verdampfung des flüssigen Brennstoffs unterstützt.

### ABWANDLUNG

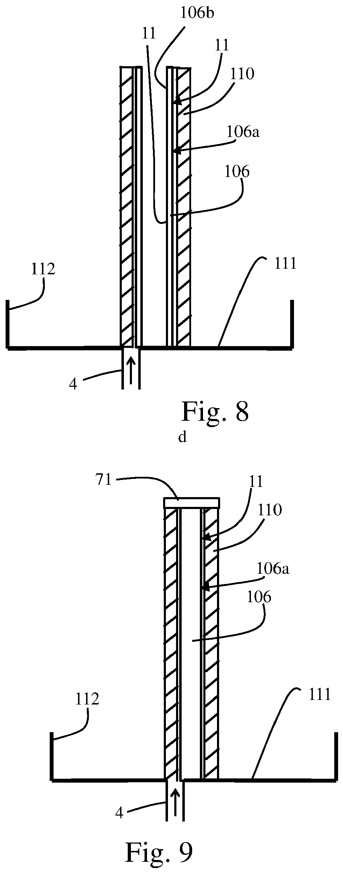

Eine Abwandlung der zweiten Ausführungsform ist in Fig. 8 schematisch dargestellt. Bei der Abwandlung der zweiten Ausführungsform ist der Trägerkörper 106 nicht als massives Bauteil ausgeführt, sondern als Hohlkörper mit einem inneren Hohlraum ausgebildet. Somit weist der Trägerkörper 106 gemäß der Abwandlung der zweiten Ausführungsform neben der dem Brennraum 3 zugewandten Brennstoffaufbereitungsoberfläche 106a auch eine dieser abgewandte Rückseite 106b auf. Die Rückseite 106b ist bei der Abwandlung dabei durch die innere Umfangsoberfläche des im Wesentlichen hohlzylindrischen Trägerkörpers 106 gebildet.

Wie bei der ersten Ausführungsform und deren Abwandlungen ist es auch bei der Abwandlung der zweiten Ausführungsform möglich, dass nur in der Brennstoffaufbereitungsoberfläche 106a die beschriebene Oberflächenstrukturierung 11 eingebracht ist, nur in der Rückseite 106b eine solche Oberflächenstrukturierung 11 eingebracht ist oder sowohl in der Brennstoffaufbereitungsoberfläche 106a und der von dieser abgewandten Rückseite 106b jeweils derartige Oberflächenstrukturierungen 11 eingebracht sind, wie es in Fig. 8 schematisch dargestellt ist.

Die zuvor in Bezug auf die erste Ausführungsform beschriebenen Abwandlungen sind dabei jeweils entsprechend auch bei der zweiten Ausführungsform möglich.

### WEITERE ABWANDLUNGEN

In Fig. 9 ist eine weitere Abwandlung des in Fig. 6 und Fig.7 dargestellten Verdampferbrenners 101 schematisch dargestellt. Die weitere Abwandlung unterscheidet sich nur darin von der zuvor beschriebenen zweiten Ausführungsform, dass der Trägerkörper 106 an seinem freien Ende mit einer zusätzlichen Abdeckung 71 versehen ist. Da sich die weiteren Komponenten nicht von der zuvor beschriebenen zweiten Ausführungsform unterscheiden, werden in Bezug auf die weitere Abwandlung dieselben Bezugszeichen wie bei der zweiten Ausführungsform verwendet und zur Vermeidung von Wiederholungen wird nicht der gesamte Aufbau des Verdampferbrenners 101 erneut beschrieben.

Die Abdeckung 71 ist an dem freien Ende des Trägerkörpers 106 derart angeordnet, dass flüssiger Brennstoff und auch übermäßiger Brennstoffdampf nicht an der Stirnseite des Trägerkörpers 106 in der axialen Richtung austreten kann, sondern gezwungen wird, in der radialen Richtung aus dem Verdampferelement 110 auszutreten. Wie in Fig. 9 schematisch dargestellt ist, ist an der freien Stirnseite des Trägerkörpers 106 eine Abdeckung 71 vorgesehen, die in der radialen Richtung von dem Außenumfang des restlichen Trägerkörpers 106 hervorsteht und die freie Stirnseite des Verdampferelementes 110 bedeckt. Die Abdeckung 71 ist aus einem zumindest im Wesentlichen dichten Material gebildet, sodass flüssiger Brennstoff und Brennstoffdampf nicht durch die Abdeckung 71 hindurchtreten können. Bevorzugt kann die Abdeckung 71 aus Metall gebildet sein, insbesondere aus temperaturbeständigem Edelstahl. Die Abdeckung 71 kann z.B. als eine separate Abdeckscheibe ausgebildet sein, die unlösbar oder lösbar an dem stirnseitigen Ende des Trägerkörpers 106 befestigt ist. In einer anderen Ausgestaltung ist es z.B. auch möglich, die Abdeckung 71 einstückig mit dem Trägerkörper 106 aus demselben Material herzustellen.

Durch die Abdeckung 71 wird verhindert, dass Brennstoff oder Brennstoffdampf insbesondere vermehrt an dem freien Ende des Trägerkörpers 106 aus dem Verdampferelement 110 austritt. In dem Falle der Anordnung des Trägerkörpers 106 in einem Gemischaufbereitungsbereich, in dem keine Umsetzung von Brennstoff-Luft-Gemisch erfolgt, wird in dieser Weise erreicht, dass der Brennstoff zumindest im Wesentlichen vollständig zur Ausbildung des Brennstoff-Luft-Gemischs dem Gemischaufbereitungsbereich zugeführt wird. Ferner wird eine negative Beeinflussung der Flammenverankerung in dem Brennraum verhindert.

Obwohl in Fig. 9 lediglich schematisch die Anordnung der beschriebenen Abdeckung 71 in Bezug auf einen im Wesentlichen massiven Trägerkörper 106 gezeigt ist, ist es z.B. auch möglich, eine solche Abdeckung 71 zusätzlich auch bei der in Fig. 8 dargestellten ersten Abwandlung der zweiten Ausführungsform vorzusehen. In diesem Fall weist die Abdeckung 71 dann bevorzugt eine im Wesentlichen ringartige Form mit einem zentralen Durchbruch auf, dessen Durchmesser insbesondere im Wesentlichen dem Durchmesser des inneren Hohlraumes in dem Trägerkörper 106 entsprechen kann.

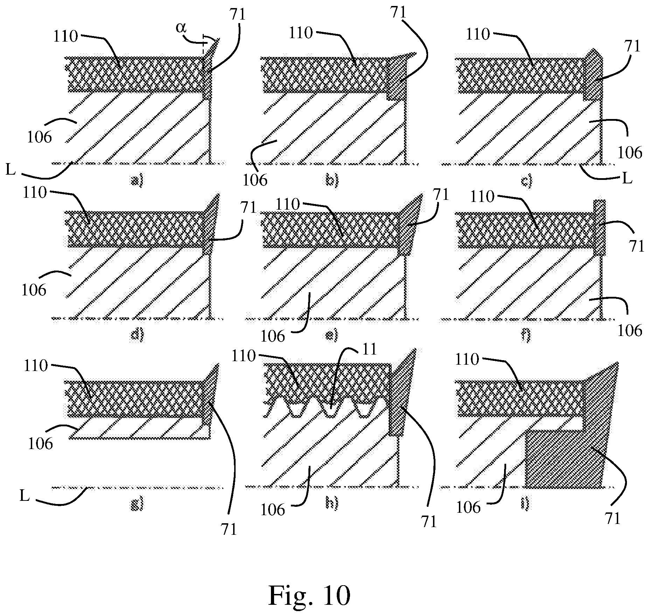

Verschiedene weitere Abwandlungen der Abdeckung 71 sind in den Fig. 10 a) bis i) schematisch dargestellt. Auch diese weiteren Abwandlungen der Abdeckung 71 können jeweils sowohl bei einem im Wesentlichen massiven Trägerkörper 106 als auch bei einem Trägerkörper 106 mit einem inneren Hohlraum vorgesehen werden.

Gemäß den in den Fig. 10a) bis i) dargestellten weiteren Abwandlungen der Abdeckung 71 steht die Abdeckung 71 in der radialen Richtung jeweils über den Außenumfang des Verdampferelementes 110 hervor und stellt eine zumindest im Wesentlichen scharfe Abrisskante für die entlang dem Außenumfang des Trägerkörpers 106 und des

Verdampferelementes 110 strömende Strömung bereit. Wie in Fig. 10 a) schematisch dargestellt ist, erstreckt sich der in der radialen Richtung hervorstehende Bereich der Abdeckung 71 unter einem Winkel α zu einer Ebene die senkrecht zu der Längsachse L verläuft. Der Winkel α kann dabei - je nach der gewünschten Strömungsführung - einen Wert zwischen 0° und 90° aufweisen.

Bei der in Fig. 10 a) schematisch dargestellten Abwandlung erstreckt sich der in der radialen Richtung hervorstehende Bereich der Abdeckung 71 z.B. unter einem Winkel α im Bereich zwischen 35° und 45°, sodass die an dem Außenumfang des Verdampferelements 110 strömenden Gase dort relativ stark nach radial außen abgelenkt werden. Ferner ist bei dieser Abwandlung der hervorstehende Bereich als eine sich in der radiale Richtung verjüngende Lippe ausgebildet, die sowohl in der radialen als auch in der axialen Richtung hervorsteht. Der hervorstehende Bereich ist dabei zu dem Rest der Abdeckung 71 leicht in Richtung der Hauptströmungsrichtung abgewinkelt ausgebildet.

Bei der in Fig. 10 b) schematisch dargestellten Abwandlung erstreckt sich der in der radialen Richtung hervorstehende Bereich der Abdeckung 71 unter einem deutlich größeren Winkel α, der zwischen 160° und 170° beträgt, sodass eine deutlich geringere radiale Ablenkung der an dem Außenumfang des Verdampferelements 110 strömenden Gase auftritt.

Bei der in Fig. 10 c) schematisch dargestellten Abwandlung erstreckt sich der in der radialen Richtung hervorstehende Bereich der Abdeckung z.B. unter einem Winkel zwischen ca. 40° und 50°. Ferner ist bei dieser Abwandlung der hervorstehende Bereich der Abdeckung 71 auch auf der von dem Verdampferelement 110 abgewandten Seite angefast bzw. abgeschrägt, um den Strömungsabriss gezielt zu beeinflussen.

Bei den in den Fig. 10 d) und 10 e) schematisch dargestellten Abwandlungen weist die Abdeckung 71 jeweils insgesamt einen eher keilförmigen Querschnitt auf, sodass der hervorstehende Bereich der Abdeckung 71 - anders als bei den Abwandlungen der Fig. 10 a) und Fig. 10 b) - nicht gegenüber dem Rest der Abdeckung 71 abgewinkelt ausgebildet ist. Wie durch einen Vergleich der Abwandlungen gemäß den Fig. 10 a) und b) und der Abwandlungen gemäß den Fig. 10 d), 10e) und 10 i) ersichtlich ist, kann der Keilwinkel des radial hervorstehenden Bereichs der Abdeckung 71 in dieser Weise gezielt eingestellt werden.

Bei der in Fig. 10 f) schematisch dargestellten Abwandlung ist die Abdeckung 71 als eine im Wesentlichen ringförmige Scheibe an dem Ende des Trägerkörpers 106 ausgebildet, sodass der hervorstehende Bereich der Abdeckung unter einem Winkel α von ca. 0° seitlich hervorsteht.

Bei der in Fig. 10 g) schematisch dargestellten Abwandlung ist der Trägerkörper 106 mit einem inneren Hohlraum versehen, der in Richtung des Brennraumes 3 offen ausgebildet ist. In diesem Fall können z.B. Gase aus dem Brennraum 3 in das Innere des Trägerkörpers 106 einströmen. Diese zusätzlichen Merkmale können z.B. auch bei den anderen Abwandlungen vorgesehen werden.

In Fig. 10 h) ist beispielhaft eine Oberflächenstrukturierung des Außenumfangs des Trägerkörpers 106 dargestellt. Bei der Abwandlung von Fig. 10 h) liegt die Abdeckung 71 ferner in einem radial innenliegenden Bereich unmittelbar stirnseitig an dem Verdampferelement 110 an und verläuft unter einem Winkel α von ca. 0°. Ein weiter außen liegender Bereich der Abdeckung 71 verläuft hingegen unter einem größeren Winkel α, sodass wiederum eine radial vorspringende, sich verjüngende Lippe ausgebildet ist. Ferner liegt in einem radial außenliegenden Bereich des Verdampferelements 110 die Abdeckung 71 in diesem Fall nicht unmittelbar an dem Verdampferelement 110 an. Auch diese ergänzenden Merkmale der Abwandlung von Fig. 10 h) können ferner auch bei den anderen Abwandlungen realisiert werden.

Bei der in Fig. 10 i) schematisch dargestellten Abwandlung ist die Abdeckung 71 als ein Einsatz ausgebildet, der mit einem zentralen vorspringenden Zapfen in eine stirnseitige Ausnehmung des Trägerkörpers 106 eingesetzt ist. Auch diese weiteren Merkmale können jeweils auch bei den anderen Abwandlungen realisiert werden.

Obwohl nur in Fig. 10 h) eine Oberflächenstrukturierung 11 des Außenumfangs des Trägerkörpers 106 dargestellt ist, kann diese auch bei den anderen Darstellungen gemäß den Fig. 10a) bis g) und i) bevorzugt ebenfalls vorhanden sein. Die Ausgestaltung der Abdeckung 71 mit der beschriebenen Abrisskante hat den weiteren Vorteil, dass die Strömung in dem Brennraum 3 noch besser stabilisiert wird. Unter anderem kann in dieser Weise die Ausbildung von Pulsationen in dem Brennraum 3 unterdrückt werden. Ferner kann ein Rückschlagen der Flamme in den stromaufwärtigen Bereich des Brennraums 3 insbesondere in dem Fall gut verhindert werden, bei dem der Brennraum 3 einen Gemischaufbereitungsbereich aufweist, in dem sich im Betrieb keine Flamme ausbilden soll.

Obwohl in Bezug auf die beschriebenen Ausführungsformen spezielle Ausgestaltungen des Trägerkörpers 6, 106 beschrieben wurden, sind auch noch weitere Ausgestaltungen möglich. Insbesondere kann der Trägerkörper auch durch einen Hohlkörper gebildet sein, dessen Innenseite dem Brennraum 3 zugewandt ist und als Brennstoffaufbereitungsoberfläche ausgebildet ist, sodass die Innenseite des Trägerkörpers z.B. gleichzeitig eine Außenwand des Brennraums 3 oder eines als Gemischaufbereitungsbereich ausgebildeten Teils des Brennraums bildet. Auch bei einer solchen Ausgestaltung sind die verschiedenen zuvor beschriebenen Abwandlungen möglich.

## Patentansprüche

1. Verdampferbrenner (1; 101) für ein mobiles Heizgerät mit:
einem Brennraum (3),
einer Brennstoffzufuhrleitung (4) zum Zuführen eines flüssigen Brennstoffs und
einem Verdampfer zum Verdampfen von zugeführtem Brennstoff,
wobei der Verdampfer einen Trägerkörper (6; 106) aus einem nichtporösen Material mit einer dem Brennraum (3) zugewandten, mit dem flüssigen Brennstoff in Berührung kommenden Brennstoffaufbereitungsoberfläche (6a; 106a) aufweist,
**dadurch gekennzeichnet, dass** in die Brennstoffaufbereitungsoberfläche (6a; 106a) und/oder eine von dieser abgewandte Rückseite (6b; 106b) des Trägerkörpers (6; 106) eine Oberflächenstrukturierung (11) mit einer Vielzahl von Vertiefungen (11a) und Erhebungen (11b) eingebracht ist, und
wobei der Trägerkörper (106) durch einen länglichen Körper gebildet ist, der sich ausgehend von einer Stirnwand (111) des Brennraums (3) beabstandet von einer Seitenwand (112) des Brennraums (3) axial in den Brennraum (3) erstreckt und dessen Außenumfangsfläche die Brennstoffaufbereitungsoberfläche (106a) aufweist.

2. Verdampferbrenner nach Anspruch 1, wobei die Oberflächenstrukturierung (11) in die Brennstoffaufbereitungsoberfläche (6a; 106a) eingebracht ist.

3. Verdampferbrenner nach Anspruch 1 oder 2, wobei die Brennstoffaufbereitungsoberfläche (6a; 106a) zu dem Brennraum (3) hin freiliegend ist.

4. Verdampferbrenner nach Anspruch 1 oder 2, wobei auf der Brennstoffaufbereitungsoberfläche (6a; 106a) ein Verdampferelement (10; 110) aus einem porösen, saugfähigen Material angeordnet ist.

5. Verdampferbrenner nach Anspruch 4, wobei das Verdampferelement (10; 110) unter einer plastischen Deformation des Verdampferelements (10; 110) gegen die Oberflächenstrukturierung (11) gepresst ist.

6. Verdampferbrenner nach Anspruch 4 oder 5, wobei an einem freien Ende des Verdampferelements (110) eine Abdeckung (71) vorgesehen ist.

7. Verdampferbrenner nach einem der vorangehenden Ansprüche, wobei die Vertiefungen (11a) als längliche Rillen und die Erhebungen (11b) als rippenartige Vorsprünge ausgebildet sind.

8. Verdampferbrenner nach einem der vorangehenden Ansprüche, wobei die Oberflächenstrukturierung (11) eine im Querschnitt betrachtet wellenartige oder gewindeartige Form aufweist.

9. Verdampferbrenner nach einem der vorangehenden Ansprüche, wobei der Trägerkörper (106) eine im Wesentlichen zylinderförmige Außenumfangsfläche aufweist.

10. Verdampferbrenner nach einem der vorangehenden Ansprüche, wobei der Trägerkörper (106) eine axiale Länge (l) aufweist, die zumindest dem 1,5-fachen, bevorzugt zumindest dem 2-fachen des Durchmessers (d) des Trägerkörpers (106) entspricht.

11. Verdampferbrenner nach einem der vorangehenden Ansprüche, wobei der Trägerkörper (106) derart in dem Brennraum (3) angeordnet ist, dass die Außenumfangsfläche von zugeführter Brennluft umströmt wird.

12. Mobiles Heizgerät mit einem Verdampferbrenner (1; 101) nach einem der vorangehenden Ansprüche.

13. Mobiles Heizgerät nach Anspruch 12, das als Standheizung oder Zusatzheizung für ein Fahrzeug ausgebildet ist.

## Claims

1. An evaporator burner (1; 101) for a mobile heating device, having:
a combustion chamber (3),
a fuel supply line (4) for the supply of a liquid fuel, and
an evaporator for the evaporation of supplied fuel,
wherein the evaporator has a carrier body (6; 106) of a non-porous material and which has a fuel preparation surface (6a; 106a) which faces toward the combustion chamber (3) and which comes into contact with the liquid fuel,
**characterized in that** a surface structuring (11) with a multiplicity of depressions (11a) and elevations (11b) is formed into the fuel preparation surface (6a; 106a) and/or into a rear side (6b; 106b), which is averted from said fuel preparation surface, of the carrier body (6; 106);
wherein the carrier body (106) is formed by an elongate body which extends axially into the combustion chamber (3) proceeding from a face wall (111) of the combustion chamber (3) and so as to be spaced apart from a side wall (112) of the combustion chamber (3), and the outer circumferential surface of which has the fuel preparation surface (106a).

2. The evaporator burner as claimed in claim 1, wherein the surface structuring (11) is formed into the fuel preparation surface (6a; 106a).

3. The evaporator burner as claimed in claim 1 or 2, wherein the fuel preparation surface (6a; 106a) is exposed in the direction of the combustion chamber (3) .

4. The evaporator burner as claimed in claim 1 or 2, wherein an evaporator element (10; 110) composed of a porous, absorbent material is arranged on the fuel preparation surface (6a; 106a).

5. The evaporator burner as claimed in claim 4, wherein the evaporator element (10; 110) is pressed, with plastic deformation of the evaporator element (10; 110), against the surface structuring (11).

6. The evaporator burner as claimed in claim 4 or 5, wherein a cover (71) is provided on a free end of the evaporator element (110).

7. The evaporator burner as claimed in one of the preceding claims, wherein the depressions (11a) are in the form of elongate channels and the elevations (11b) are in the form of rib-like projections.

8. The evaporator burner as claimed in one of the preceding claims, wherein the surface structuring (11) has an undulating or thread-like form as viewed in cross section.

9. The evaporator burner as claimed in any one of the preceeding claims, wherein the carrier body (106) has a substantially cylindrical outer circumferential surface.

10. The evaporator burner as claimed in any one of the preceeding claims, wherein the carrier body (106) has an axial length (1) which corresponds to at least 1.5 times, preferably at least 2 times, the diameter (d) of the carrier body (106).

11. The evaporator burner as claimed in any one of the preceeding claims, wherein the carrier body (106) is arranged in the combustion chamber (3) such that supplied combustion air flows around the outer circumferential surface.

12. A mobile heating device, having an evaporator burner (1; 101) as claimed in one of the preceding claims.

13. The mobile heating device as claimed in claim 12, which heating device is in the form of an engine-independent heater or auxiliary heater for a vehicle.

## Revendications

1. Brûleur à vaporisation (1 ; 101) pour un appareil de chauffage mobile, comprenant :
une chambre de combustion (3),
une conduite d'alimentation en combustible (4) pour l'alimentation d'un combustible fluide et
un vaporisateur pour vaporiser le combustible acheminé,
le vaporisateur présentant un corps de support (6 ; 106) constitué d'un matériau non poreux avec une surface de traitement de combustible (6a ; 106a) venant en contact avec le combustible fluide et tournée vers la chambre de combustion (3),
**caractérisé en ce que** dans la surface de traitement de combustible (6a ; 106a) et/ou un côté arrière (6b ; 106b) du corps de support (6 ; 106) opposé à celle-ci est réalisée une structuration de surface (11) avec une pluralité de renfoncements (11a) et de rehaussements (11b), et
le corps de support (106) est formé par un corps allongé qui s'étend à partir d'une paroi frontale (111) de la chambre de combustion (3) à distance d'une paroi latérale (112) de la chambre de combustion (3) axialement dans la chambre de combustion (3) et dont la surface périphérique extérieure présente la surface de traitement de combustible (106a).

2. Brûleur à vaporisation selon la revendication 1, dans lequel la structuration de surface (11) est réalisée dans la surface de traitement de combustible (6a ; 106a).

3. Brûleur à vaporisation selon la revendication 1 ou 2, dans lequel la surface de traitement de combustible (6a ; 106a) est exposée vers la chambre de combustion (3).

4. Brûleur à vaporisation selon la revendication 1 ou 2, dans lequel un élément de vaporisation (10 ; 110) constitué d'un matériau poreux, aspirant, est disposé sur la surface de traitement de combustible (6a ; 106a).

5. Brûleur à vaporisation selon la revendication 4, dans lequel l'élément de vaporisation (10 ; 110) est pressé par déformation plastique de l'élément de vaporisation (10 ; 110) contre la structuration de surface (11).

6. Brûleur à vaporisation selon la revendication 4 ou 5, dans lequel, au niveau d'une extrémité libre de l'élément de vaporisation (110) est prévu un recouvrement (71).

7. Brûleur à vaporisation selon l'une quelconque des revendications précédentes, dans lequel les renfoncements (11a) sont réalisés sous forme de rainures oblongues et les rehaussements (11b) sont réalisés sous forme de saillies en forme de nervures.

8. Brûleur à vaporisation selon l'une quelconque des revendications précédentes, dans lequel la structuration de surface (11) présente une forme ondulée ou enroulée, vu en coupe transversale.

9. Brûleur à vaporisation selon l'une quelconque des revendications précédentes, dans lequel le corps de support (106) présente une surface périphérique extérieure essentiellement cylindrique.

10. Brûleur à vaporisation selon l'une quelconque des revendications précédentes, dans lequel le corps de support (106) présente une longueur axiale (1) qui correspond à au moins 1,5 fois, de préférence à au moins 2 fois, le diamètre (d) du corps de support (106).

11. Brûleur à vaporisation selon l'une quelconque des revendications précédentes, dans lequel le corps de support (106) est disposé dans la chambre de combustion (3) de telle sorte que la surface périphérique extérieure soit parcourue par l'écoulement d'air de combustion acheminé.

12. Appareil de chauffage mobile comprenant un brûleur à vaporisation (1 ; 101) selon l'une quelconque des revendications précédentes.

13. Appareil de chauffage mobile selon la revendication 12, qui est réalisé sous forme de chauffage d'appoint ou de chauffage supplémentaire pour un véhicule.
